(19) **Europäisches Patentamt / European Patent Office / Office européen des brevets**

(11) **EP 4 474 784 B1**

(12) **FASCICULE DE BREVET EUROPEEN**

(45) Date de publication et mention de la délivrance du brevet:
**21.01.2026   Bulletin 2026/04**

(21) Numéro de dépôt: **24179696.0**

(22) Date de dépôt: **03.06.2024**

(51) Classification Internationale des Brevets (IPC):
**G01K 11/324** *(2021.01)*      **G01K 13/024** *(2021.01)*

(52) Classification Coopérative des Brevets (CPC):
**G01K 11/324; G01K 13/024;** G01K 2213/00

(54) **UTILISATION D'UN DISPOSITIF POUR LA MESURE DE LA TEMPÉRATURE DE L'AIR**

VERWENDUNG EINES GERÄTS ZUR MESSUNG DER LUFTTEMPERATUR

USE OF A DEVICE FOR MEASURING AIR TEMPERATURE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **07.06.2023   FR 2305715**

(43) Date de publication de la demande:
**11.12.2024   Bulletin 2024/50**

(73) Titulaires:
• **Electricité de France**
  **75008 Paris (FR)**
• **La Rochelle Université**
  **17031 La Rochelle Cedex 1 (FR)**
• **Centre National de la Recherche Scientifique (CNRS)**
  **75016 Paris (FR)**

(72) Inventeurs:
• **HOUVIN, Maxime**
  **92000 Nanterre (FR)**
• **MOREL, Pascal**
  **78530 Buc (FR)**
• **MOULOUEL, Rafik**
  **92500 Rueil Malmaison (FR)**

(74) Mandataire: **Regimbeau**
**20, rue de Chazelles**
**75847 Paris Cedex 17 (FR)**

(56) Documents cités:
**US-B2- 10 240 824**

• **ANONYMOUS: "Singlemode Fibers Metal Coated Series: Gold/Aluminum", HERACLE GMBH CORPORATE WEBSITE, 14 December 2019 (2019-12-14), Jena, Germany, XP093099934, Retrieved from the Internet <URL:https://www.heracle.de/wp-content/uploads/heracle_DS-HFGESMF_REV2_2020JUL01.pdf> [retrieved on 20231109]**
• **MOULOUEL RAFIK ET AL: "Mesures du champ de temp�rature par fibres optiques au sein d'un local exp�rimental industriel d�di� � l'�tude des ph�nom�nes thermo-a�rauliques", 2 June 2023 (2023-06-02), Paris (FR), pages 53 - 60, XP093099413, Retrieved from the Internet <URL:https://www.sft.asso.fr/DOleditions/CFT2023/PDF/45_doi.pdf> [retrieved on 20231108], DOI: 10.25855/SFT2023-045**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un dispositif pour la mesure de la température de l'air, ainsi que son utilisation.

Le domaine de l'invention concerne les mesures de la température de l'air dans des locaux, comme par exemple dans des centrales nucléaires de production d'électricité.

L'un des problèmes des dispositifs de mesure de la température de l'air est les biais de mesure provoqués par les effets radiatifs.

Les effets radiatifs correspondent aux conséquences en termes d'échanges thermiques sur un corps, du rayonnement électromagnétique émis par un autre corps (rayonnant). Ce mode de transfert thermique s'effectue sans transport de matière selon la température du corps rayonnant. Plus la température du corps rayonnant est élevée, plus le rayonnement thermique s'avère intense aux courtes longueurs d'onde. Un exemple illustrant ce mode de transfert concerne le rayonnement thermique émis par le soleil, qui est situé principalement dans le visible.

L'air est un milieu quasiment transparent au rayonnement thermique. Or, tout instrument de mesure de température de l'air évalue la température de l'air à partir de sa propre température et en tant que corps solide, échange par rayonnement thermique avec son environnement, ce qui engendre généralement des biais de mesure pouvant être du premier ordre. Dans des locaux industriels présentant des tuyauteries de surfaces relativement chaudes (supérieures à 100°C), il est par exemple possible de constater des écarts supérieurs à 5 °C entre la température de l'air et la température vue par la sonde mise en œuvre pour mesurer la température de l'air. Ces erreurs de mesures systématiques ou biais de mesure ne sont pas directement corrigibles, car ils dépendent des orientations et des températures de chaque corps rayonnant.

Les mesures de la température d'air visent généralement à s'assurer que les matériels associés à ces environnements ou zones de mesures de température sont ou seront dans des conditions adéquates avec les activités visées.

A titre d'exemple, dans des locaux disposant de matériels électriques (comme des centres de données informatiques, des tableaux de connexion électrique, des moteurs), une élévation de la température pourrait soit favoriser une usure précoce, soit induire une défaillance pouvant remettre en cause partiellement ou totalement certaines fonctionnalités allouées à ces matériels. Ceci peut également concerner des espaces de travail où la température maximale est généralement réglementée.

Les différents domaines où de telles mesures sont effectuées sont relativement divers et peuvent être dans le domaine de la météorologie où l'on cherche généralement à mesurer la température atmosphérique, dans le domaine biologique et médical où l'on souhaite maîtriser finement la température et la qualité de l'air pour éviter par exemple le développement de bactéries, champignons ou acariens, dans le domaine de la mesure physique où l'on souhaite disposer de mesure maîtrisée pour participer à la caractérisation de phénomènes physiques.

Notamment, le domaine de l'invention concerne les instruments et méthodes de mesure de la température de l'air dans un environnement présentant ou pouvant présenter des échanges importants par rayonnement. Celui-ci concerne aussi bien les locaux industriels avec des matériels disposant de surfaces chaudes que d'environnement extérieur où l'ensoleillement est important. Les métiers concernés sont ceux cherchant à disposer de mesures de température de l'air métrologiquement maîtrisées, c'est-à-dire avec une confiance et une garantie envers les mesures résultant des processus de mesure de la température de l'air.

Dans le cadre de mesures physiques, cela permet par exemple de justifier le dimensionnement d'un système, valider ou non la réception d'une installation.

Des solutions connues mises en œuvre sont des mesures ponctuelles utilisant un matériau comme vecteur d'une température : le capteur mesure la température de la sonde.

Lorsque l'environnement où l'on souhaite effectuer la mesure est soumis à des effets radiatifs importants (cela peut venir par exemples de tuyauteries chaudes, d'armoires de matériels électriques, voire d'ensoleillement élevé), le matériau de la sonde sensible est influencé par l'apport calorique amené par les rayonnements, ce qui induit une erreur sur la mesure de la température de l'air.

Ce biais de mesure n'est a priori pas caractérisable (car il dépend lui-même des températures de surfaces environnantes).

Le document US-10240824-B2 décrit un procédé de contrôle d'un échangeur de chaleur à air, utilisant des fibres optiques.

Un objectif de l'invention est d'obtenir une utilisation d'un dispositif de mesure de la température, qui résolve le problème mentionné ci-dessus lié aux biais de mesure et qui permette de mesurer d'une manière fiable et locale la température de l'air en présence possible d'éléments extérieurs rayonnants.

A cet effet, un premier objet de l'invention est une utilisation d'un dispositif de mesure suivant la revendication 1.

Grâce à l'invention, la fibre optique a un faible diamètre externe, afin de favoriser les effets convectifs, et dispose d'un revêtement à faible émissivité sur une grande partie du spectre (notamment dans le visible et l'infrarouge), ce qui limite les échanges thermiques radiatifs et in fine rend négligeables les biais des effets radiatifs. On rappelle que les effets convectifs correspondent aux conséquences en termes d'échanges thermiques à l'interface entre un fluide et un solide ou un liquide, engendrés par les mouvements internes animant le fluide.

De plus, l'invention évite de devoir disposer d'autant de sondes que de points de mesures échantillonnés, lesquels sont contraignants en termes de mise en œuvre. L'invention évite notamment les difficultés suivantes : autant de voies de mesures que de capteurs, autant d'étalonnages que de capteurs, les connexions filaires des matériels, les coûts élevés, les effets de perturbation de l'écoulement de l'air, la faible finesse du maillage.

Les revendications 2 à 22 concernent des modes de réalisation de l'utilisation suivant la revendication 1.

L'invention sera mieux comprise à la lecture de la description qui va suivre, donnée uniquement à titre d'exemple non limitatif en référence aux figures ci-dessous des dessins annexés.

[Fig. 1] représente une vue schématique d'une fibre optique revêtue pour être utilisé dans le dispositif de mesure de la température de l'air suivant invention.

[Fig. 2] représente une vue schématique du dispositif de mesure de la température de l'air suivant l'invention.

[Fig. 3] représente une vue schématique du dispositif de mesure de la température de l'air suivant un mode de réalisation de l'invention.

[Fig. 4A] représente une vue schématique de face du dispositif de mesure de la température de l'air suivant un mode de réalisation de l'invention.

[Fig. 4B] représente une vue schématique de dessus du dispositif de mesure de la température de l'air suivant un mode de réalisation de l'invention.

[Fig. 4C] représente une vue schématique de face d'une partie du dispositif de mesure de la température de l'air suivant un mode de réalisation de l'invention.

[Fig. 5] représente un exemple de cartographie monodimensionnelle de la température de l'air, pouvant être obtenue par le dispositif de mesure de la température de l'air suivant un mode de réalisation de l'invention.

[Fig. 6] représente un exemple de cartographie bidimensionnelle de la température de l'air, pouvant être obtenue par le dispositif de mesure de la température de l'air suivant un mode de réalisation de l'invention.

[Fig. 7] représente un exemple de cartographie tridimensionnelle de la température de l'air, pouvant être obtenue par le dispositif de mesure de la température de l'air suivant un mode de réalisation de l'invention.

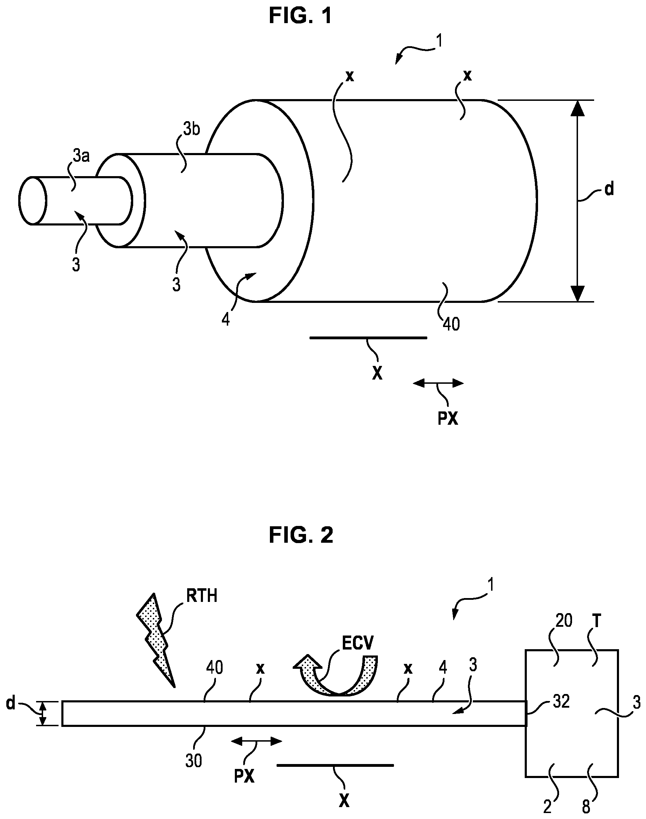

On décrit ci-dessous plus en détail en référence aux figures 1, 2, 3, 4A, 4B, 4C, 5, 6, 7 des modes de réalisation du dispositif 1 de mesure de la température de l'air suivant l'invention, ainsi qu'une utilisation de ce dispositif 1 de mesure de la température de l'air suivant l'invention.

A la figure 1, le dispositif 1 de mesure comporte une fibre optique 3 revêtue d'un revêtement 4 externe.

La fibre optique 3 peut comporter un cœur 3a ayant un certain indice pour la propagation de signaux dans et le long de la fibre optique 3, laquelle s'étend suivant une première direction X de mesure. Les signaux sont dans un certain spectre, visible ou infrarouge, par exemple compris dans la plage de longueur d'onde allant de de 0.3 $\mu$m à 100 $\mu$m. La fibre optique 3 peut comporter une gaine optique 3b ayant un indice inférieur à l'indice du cœur 3a.

Le revêtement 4 externe est en un matériau ayant une émissivité $\varepsilon$ inférieure ou égale à 0,1. Dans un mode de réalisation préféré, l'émissivité $\varepsilon$ est inférieure ou égale à 0,05. Le revêtement 4 externe à une surface externe 40 nue, qui est exposée à l'air sur au moins une majeure partie d'une longueur de la fibre optique 3, laquelle s'étend suivant une première direction X de mesure. Le revêtement 4 externe a un diamètre externe d, qui est inférieur ou égal à 200 $\mu$m. Le dispositif 1 de mesure est configuré pour mesurer la température de l'air en au moins un point x de mesure ou en plusieurs points x de mesure, lequel(lesquels) est(sont) situé(s) sur la surface externe 40 du revêtement 4 externe. Bien entendu, plusieurs fibres optiques 3 chacune revêtue de son revêtement externe 4 pourraient être prévues dans le dispositif 1 de mesure. La fibre optique 3 revêtue du revêtement 4 externe forme un capteur de la température locale de l'air au(x) point(s) x de mesure situé(s) sur la surface externe 40 du revêtement 4 externe. La fibre optique 3 revêtue du revêtement 4 externe peut être rectiligne suivant la première direction X de mesure. La première direction X de mesure peut être horizontale, ou autre.

La loi de Stefan-Boltzmann définit la relation entre le rayonnement thermique $\varphi_r$ et la température T d'un objet, d'émissivité $\varepsilon$, considéré comme un corps noir, selon l'équation suivante :

$$\varphi_r = \varepsilon\sigma T^4$$

où $\sigma$ est la constante de Stefan-Boltzmann.

Le revêtement 4 externe de faible émissivité $\varepsilon$ fait donc office de bouclier radiatif et permet de limiter le rayonnement thermique RTH capté par le matériau de la fibre 3. Le faible diamètre externe d du revêtement 4 externe permet d'augmenter le coefficient de convection de la fibre 3 ainsi revêtue par rapport au coefficient radiatif de celle-ci. On favorise donc la prise en compte des effets convectifs ECV à proximité du revêtement externe 4.

La faible émissivité $\varepsilon$ du revêtement 4 externe de la fibre optique 3, associée à son diamètre externe d, permet de diminuer le biais de mesure de la température de l'air sur la surface externe 40 du revêtement 4 externe de la fibre optique 3. Ce biais de mesure est en effet provoqué par les rayonnements thermiques, qui sont émis par des objets ou surfaces environnants, vers ce revêtement 4 externe.

On évite ainsi que la mesure de la température de l'air sur la surface externe 40 du revêtement externe 4 soit faussée par les rayonnements thermiques environnants.

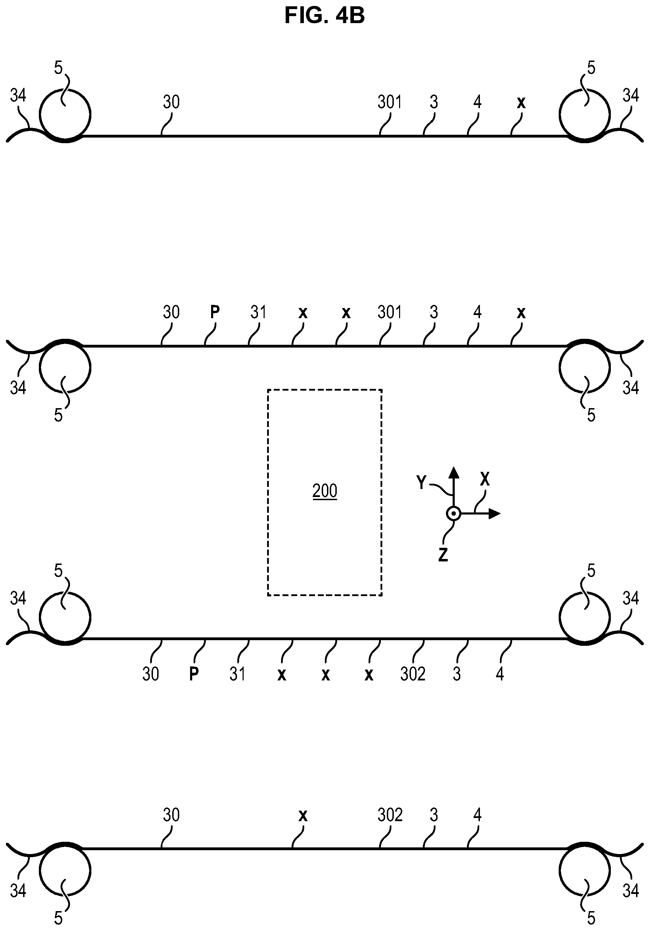

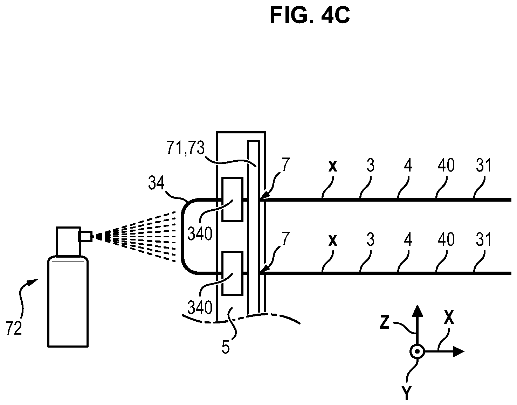

L'invention permet ainsi de multiplier les points x de mesure de la température de l'air le long d'une fibre optique, sans modifier les écoulements globaux de l'air, et permet à la fois de s'affranchir des biais de mesures usuelles engendrées par les effets radiatifs et de permettre, en complément, un maillage spatial de la mesure de température en une, deux ou trois dimensions et par exemple d'un volume d'air donné. L'invention permet de mesurer par un seul capteur 30, formé de la fibre optique 3 et de son revêtement externe 4 (dans le cas où un seul capteur précité 30 est prévu) la température de l'air en plusieurs points x de mesure. Bien entendu, plusieurs capteurs 30 peuvent être prévus, ainsi que décrit ci-dessous en référence aux figures 4B et 4C.

Le matériau du revêtement 4 externe ayant une émissivité $\varepsilon$ inférieure ou égale à 0,1 peut être métallique, par exemple en or ou en aluminium, ou autre. L'état de surface du revêtement 4 externe peut être poli ou ultra poli. L'émissivité $\varepsilon$ du matériau du revêtement 4 externe en aluminium peut être par exemple de l'ordre de 0,05. L'émissivité $\varepsilon$ du matériau du revêtement 4 externe en or peut être par exemple de l'ordre de 0,02.

L'invention permet une mesure de la température T de l'air soumis à un spectre électromagnétique large, visible et infrarouge, par exemple de 0.3 $\mu m$ à 100 $\mu m$. L'émissivité $\varepsilon$ est considérée dans ce spectre.

La fibre optique peut être par exemple en silice, ou autre. La fibre optique 3 peut être monomode, ou de préférence multimode.

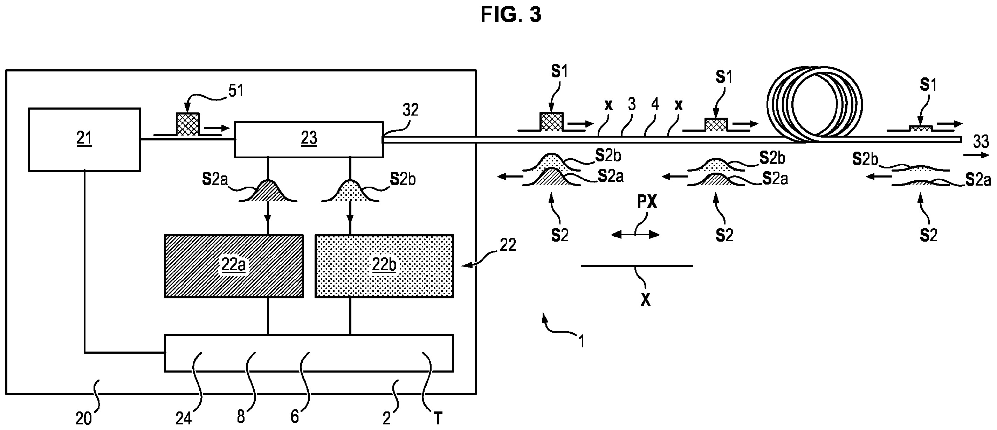

Dans un mode de réalisation, ainsi qu'illustré aux figures 2 et 3, le dispositif 1 de mesure comporte un module 6 d'échantillonnage de plusieurs mesures de la température T en respectivement plusieurs points x de mesure sur la longueur de la fibre optique 3. Ce module 6 d'échantillonnage peut être prévu dans le module 2 de calcul décrit ci-dessous ou dans l'interrogateur 20 de type Raman décrit ci-dessous.

Dans un mode de réalisation, ainsi qu'illustré aux figures 2 et 3, le dispositif 1 de mesure comporte un module 2 de calcul, par réflectométrie de premiers signaux émis dans la fibre optique 3, pour calculer plusieurs mesures de la température T en respectivement plusieurs points x de mesure sur la surface externe 40 de la fibre optique 3, répartis le long de la première direction X de mesure. Le module 2 de calcul est raccordé à au moins une extrémité 32 de la fibre optique 3 et est configuré pour calculer la température T de l'air aux points de pièces x de mesure situés sur la surface externe 40 du revêtement 4 externe. Les mesures de la température T sont calculées sur le principe de l'OTDR (en anglais : Optical Time-Domain Reflectometer, ou réflectométrie optique temps - domaine) à partir de premiers signaux S1, qui sont émis par un (ou plusieurs) émetteur 21 (par exemple une ou plusieurs source laser 21) du module 2 et qui se propagent le long de la fibre optique 3, et à partir de deuxièmes signaux S2, qui sont réfléchis par des défauts de la fibre optique 3 en réponse aux premiers signaux S1 et qui sont reçus par un (ou plusieurs) récepteur 22 (par exemple une (ou plusieurs) photodiode 22) du module 2. Le (ou les) émetteur 21 est relié à l'extrémité 32 de la fibre optique 3 par l'intermédiaire d'un multiplexeur 23 du module 2. Le (ou les) récepteur 22 est relié à l'extrémité 32 de la fibre optique 3 par l'intermédiaire du multiplexeur 23. Le (ou les) émetteur 21 et le (ou les) récepteur 22 sont reliés à une unité 24 de commande configurée pour commander ceux-ci ainsi que le multiplexeur 23. Cette unité 24 de commande comporte les moyens de calcul ou calculateurs décrits ci-dessous.

L'unité 24 de commande comporte le module 6 d'échantillonnage de plusieurs mesures de la température T en respectivement plusieurs points x de mesure sur la longueur de la fibre optique 3. Les points x de mesure peuvent être répartis d'une manière régulière suivant un pas fixe PX le long de la fibre optique 3 suivant la première direction X. Il y a en ou à proximité de chaque point x de mesure un défaut précité de la fibre optique 3, qui va réfléchir les deuxièmes signaux S2. Le pas fixe PX est supérieur à la distance entre les défauts mentionnés ci-dessus de la fibre optique 3 suivant la première direction X. Il y a donc dans chaque pas fixe PX plusieurs défauts précités de la fibre optique 3. Peut être supérieur ou égal à 1 cm est inférieur ou égal à 30 cm. Le pas fixe PX peut être par exemple de l'ordre de 15 cm.

Ainsi illustré à la figure 3, le module 2 de calcul peut être ou comprendre au moins un interrogateur 20 de type Raman ou spectromètre de type Raman. L'effet Raman est un phénomène physique de diffusion inélastique d'un photon des premiers signaux émis le long de la fibre optique 3. L'inélasticité de la diffusion des premiers signaux S1 le long de la fibre optique 3 provoque un échange d'énergie entre le photon et la fibre 3, qui provoque une modification de la longueur d'onde des deuxièmes signaux S2 réfléchis. Dans le cas de la mesure par fibre optique par effet Raman, la température pour différentes longueurs de fibre optique 3 est calculée par le calculateur 24 à partir du rapport de puissance ($\frac{P_s(t,l)}{P_{as}(t,l)}$ ou l'inverse) entre deux raies S2a, S2b de fréquences de pics prescrites différentes (dites pic Stokes S2a et pic anti-Stokes S2b) réfléchies dans les deuxièmes signaux S2 au niveau de défauts le long de la fibre optique 3, ces défauts étant non prescrits et aléatoires le long de la fibre optique 3. A cet effet, le récepteur 22 peut comporter un premier récepteur 22a permettant de détecter et de mesurer dans les deuxièmes signaux S2 la puissance $P_s$ du pic Stokes S2a, et un deuxième récepteur 22b permettant de détecter et de mesurer dans les deuxièmes signaux S2 la puissance $P_{as}$ du pic anti-Stokes S2b. En un même point x de mesure, une modification de la température T sur la surface externe 40 du revêtement externe 4 modifie ce rapport et donc la mesure de la température T, effectué par le module 2.

Par exemple, l'interrogateur 20 de type Raman émet comme premiers signaux S1 une impulsion laser monochromatique (par exemple, pour une fibre optique 3 en silice, à 1064 nm et 1550 nm) et mesure par les récepteurs 22a et 22b les puissances $P_s$ et $P_{as}$ rétrodiffusée au sein de la fibre 3 aux deux fréquences prescrites S2a, S2b des pics Stokes et anti-Stokes. L'instant de retour de l'impulsion dans les deuxièmes signaux S2 réfléchis par rapport à l'instant démission des premiers signaux S1 émis permet de calculer t. A tout instant t et en tout point x de mesure ayant l'abscisse $l$ long de la fibre optique 3 depuis l'interrogateur 20 de type Raman, le rapport entre la puissance de ces deux pics S2a, S2b est lié à la température T = $T(t, l)$ de la fibre 3 par la formule suivante :

$$T(t,l) = T_{offset} + \frac{\gamma}{ln\left(\frac{P_s(t,l)}{P_{as}(t,l)}\right) + C(t) - l\,\Delta\alpha}$$

Où $P_s$ est la puissance du pic Stokes S2a, $P_{as}$ est la puissance optique du pic anti-Stockes S2b, mesurées par les photodiodes de l'interrogateur 20, $T_{offset}$ est le coefficient de l'interrogateur 20 pour corriger un biais constant, $\Delta\alpha$ est le coefficient d'atténuation différentielle ($\alpha_{aS} - \alpha_S$) entre les pics Stokes S2a et anti-Stockes S2b, $\gamma$ et $C(t)$ sont des paramètres intrinsèques prescrits de l'interrogateur 20. La quantité $l\,\Delta\alpha = \int_0^l \alpha(x)dx$ , où $\alpha(x)$ est l'atténuation différentielle entre le pic Stockes et le pic anti-Stockes au point d'abscisse x.

Le paramètre C = C(t) peut soit avoir été calibré, soit avoir été calculé à l'avance en utilisant une portion de fibre 3 interne à l'interrogateur 20 et une mesure de température classique, c'est-à-dire à l'abscisse l comprise entre 0 et L, où L est la longueur de la fibre 3 entre ses deux extrémités 32 et 33.

Dans un mode de réalisation de l'invention, $l\,\Delta\alpha$ peut être calculé de la manière suivante.

On effectue une première mesure à l'abscisse $l$ en raccordant l'interrogateur 20 à la première extrémité 32 de la fibre optique 3, ayant l'abscisse 0, c'est-à-dire dans le sens direct, noté → ci-dessous, pour obtenir la puissance optique $P^{\rightarrow}Stokes$ ($l$) du pic Stokes 32a de cette première mesure et la puissance optique $P^{\rightarrow}anti\text{-}Stokes$ ($l$) du pic anti-Stockes S2b de cette première mesure.

Puis, on effectue une deuxième mesure à l'abscisse $l$ en raccordant l'interrogateur 20 à la deuxième extrémité 33 de la fibre optique 3 (celle éloignée de la première extrémité 32), ayant l'abscisse L, c'est-à-dire dans le sens indirect, noté ← ci-dessous, pour obtenir la puissance optique $P^{\leftarrow}Stokes$ ($l$) du pic Stokes S2a de cette deuxième mesure et la puissance optique $P^{\leftarrow}anti\text{-}Stokes$ ($l$) du pic anti-Stockes S2b de cette deuxième mesure.

La quantité $l\,\Delta\alpha = \int_0^l \alpha(x)dx$ est calculée suivant l'équation suivante :

$$\int_0^l \alpha(x)dx = \frac{1}{2}\left(ln\left(\frac{P^{\rightarrow}_{Stokes}(l)}{P^{\rightarrow}_{anti-Stokes}(l)}\right) - ln\left(\frac{P^{\leftarrow}_{Stokes}(l)}{P^{\leftarrow}_{anti-Stokes}(l)}\right)\right) - E$$

avec

$$E = \frac{1}{2}\left(ln\left(\frac{P^{\rightarrow}_{Stokes}(0)}{P^{\rightarrow}_{anti-Stokes}(0)}\right) - ln\left(\frac{P^{\leftarrow}_{Stokes}(0)}{P^{\leftarrow}_{anti-Stokes}(0)}\right)\right)$$

Cette quantité E = E(t) peut être calculée en effectuant des troisième et quatrième mesures correspondant aux première et deuxième mesures pour l'abscisse l = 0.

Puis la température T = *T(t, l)* de la fibre 3 peut être calculée par la formule suivante :

$$T(l,t) = \frac{\gamma}{\frac{1}{2}\left(ln\left(\frac{P^{\rightarrow}{}_{Stokes}(l,t)}{P^{\rightarrow}{}_{anti-Stokes}(l,t)}\right) + ln\left(\frac{P^{\leftarrow}{}_{Stokes}(l,t)}{P^{\leftarrow}{}_{anti-Stokes}(l,t)}\right)\right) + C(t) + E(t)}$$

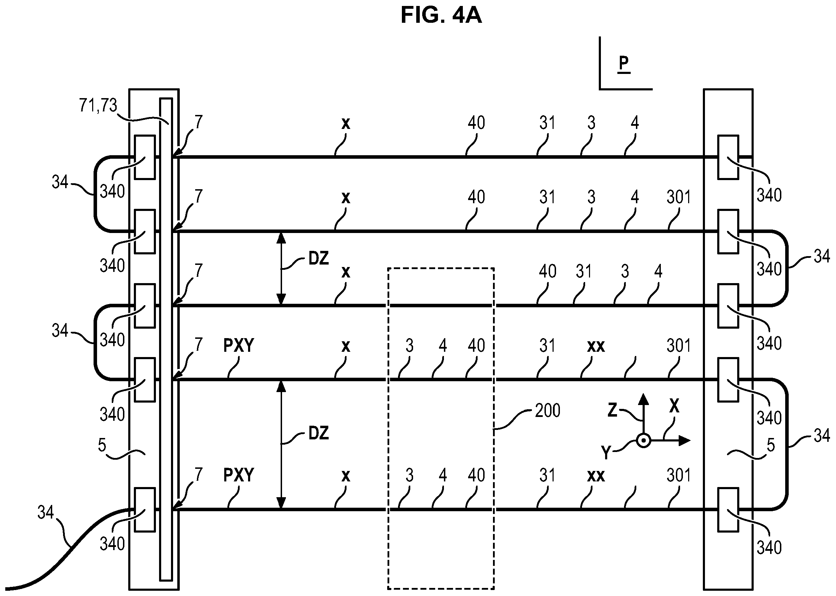

Dans un mode de réalisation de l'invention, illustré aux figures 4A, 4B, 4C, le dispositif 1 de mesure comporte une paire de supports 5 écartés l'un de l'autre, auxquels la fibre optique 3 revêtue du revêtement 4 externe est fixée. La fibre optique 3 revêtue du revêtement 4 externe s'étend entre les supports 5 suivant la première direction X de mesure sur la majeure partie de la longueur de la fibre optique 3, dont le revêtement 4 externe est nu et exposé à l'air entre les supports 5. Chaque support 5 peut être formé par un poteau ou autre, pouvant être par exemple vertical ou autre. Plusieurs paires de supports 5 peuvent être prévues dans le dispositif 1 de mesure.

Dans un mode de réalisation de l'invention, illustré aux figures 4A, 4B, 4C, plusieurs tronçons 31, appelés ci-dessous tronçons principaux 31, de la longueur d'une même fibre optique 3 revêtue du revêtement 4 externe, s'étendent chacun suivant la première direction X de mesure entre les supports 5 de la paire des supports 5 et sont espacés l'un de l'autre au moins suivant la deuxième direction Z perpendiculaire à la première direction X de mesure. Par exemple, la première direction X de mesure peut être horizontale et la deuxième direction Z peut être verticale. La fibre optique 3 revêtue du revêtement 4 externe et par exemple des allers et retours entre les supports 5 ou poteaux 5. Les tronçons principaux 31 peuvent être rectilignes suivant la première direction X de mesure. Les tronçons principaux 31 peuvent être reliés l'un à la suite de l'autre par des tronçons secondaires courbes 34 de la fibre optique 3 revêtue du revêtement 4 externe. Sur la figure 4, les tronçons secondaires 34 sont représentés d'une manière symbolique par des droites mais sont courbes. Le rayon de courbure des tronçons secondaires 34 courbe est supérieur au rayon de courbure minimal de la fibre optique 3 revêtue du revêtement externe 4 (rayon de courbure minimal avant rupture), et est par exemple supérieur à 1,5 fois ce rayon de courbure minimal. Ce rayon de courbure minimal peut être de l'ordre de 200 fois le diamètre extérieur d du revêtement externe 4. Des moyens 340 de fixation des tronçons secondaires 34 aux supports 5 sont prévus. Ces moyens de fixation peuvent être comprendre des rubans adhésifs 340, ou tout autre attache mécanique. Chaque poteau 5 peut être en un matériau isolant de l'électricité, comme par exemple en PVC ou autre.

Dans un mode de réalisation de l'invention, illustré aux figures 4A, 4B, les tronçons 31 de la longueur de la fibre optique 3 revêtue du revêtement 4 externe sont situés dans un plan P de mesure comprenant la première direction X de mesure et la deuxième direction Z. Le plan P de mesure peut être vertical ou autre. Cela permet d'avoir un maillage de la mesure de température dans chaque plan P de mesure (par exemple entre les supports 5), sans engendrer d'effet d'obstruction sur l'écoulement de l'air.

Dans un mode de réalisation de l'invention, illustré aux figures 1, 2, 3, 4A, 4B, 4C, 5, 6, 7 et 8, le dispositif 1 de mesure comporte (par exemple dans le module 2 de mesure ou dans l'interrogateur 20 de type Raman ou dans l'unité 24 de commande) un calculateur 8 configuré pour calculer par interpolation la température en des points d'interpolation qui sont situés entre les points x de mesure sur la longueur de la fibre optique 3. Cette interpolation peut être par exemple linéaire. Cela permet d'améliorer le maillage spatial de la mesure de température en une dimension le long de la fibre optique 3, sans engendrer d'effet d'obstruction sur l'écoulement de l'air.

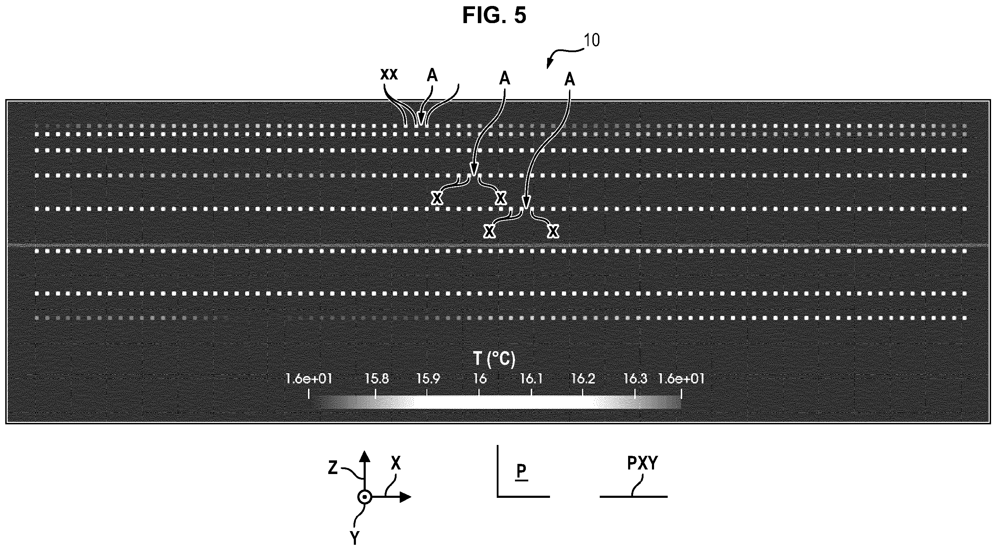

Dans un mode de réalisation de l'invention, illustré aux figures 2, 3 et 5, le dispositif 1 de mesure comporte (par exemple dans le module 2 de mesure ou dans l'interrogateur 20 de type Raman ou dans l'unité 24 de commande) un calculateur 8 configuré pour calculer une cartographie 10 monodimensionnelle de la température, par interpolation des mesures de la température T prises respectivement aux points x de mesure sur la longueur de la fibre optique 3, pour calculer la température en des points A d'interpolation le long de la fibre 3 suivant la direction X de mesure, les points A d'interpolation étant situés entre les points x de mesure sur la longueur de la fibre optique 3 suivant la première direction X de mesure. Cette interpolation peut être par exemple linéaire. Le dispositif de mesure peut comporter un écran permettant de visualiser la cartographie 10 monodimensionnelle de la température, avec des niveaux de gris ou de couleur différents suivant la valeur de la température en chaque point A et x, ainsi que représenté à titre d'exemple à la figure 5.

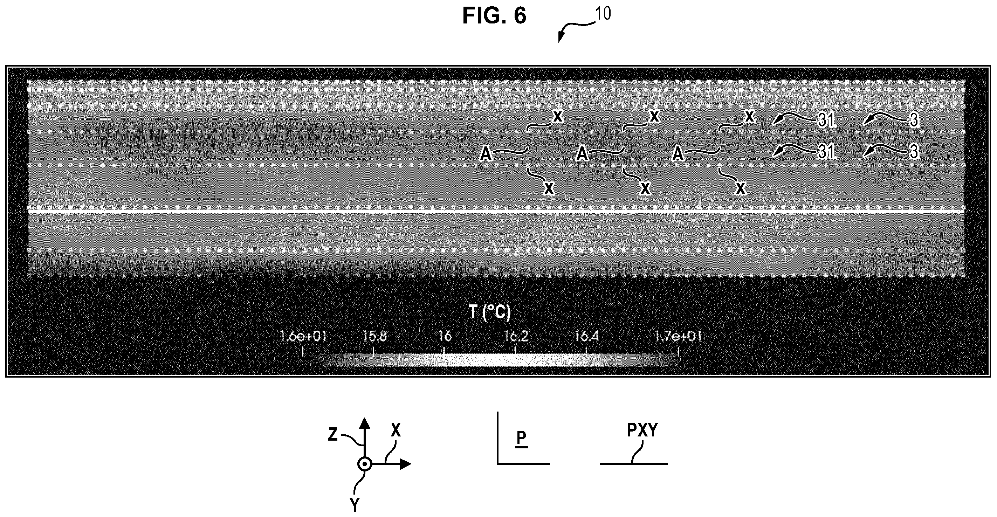

Dans un mode de réalisation de l'invention, illustré aux figures 2, 3, 4A, 4B, 4C et 6, le dispositif 1 de mesure comporte (par exemple dans le module 2 de mesure ou dans l'interrogateur 20 de type Raman ou dans l'unité 24 de commande) un calculateur 8 configuré pour calculer une cartographie 10 bidimensionnelle de la température, par interpolation des mesures de la température T prises respectivement aux points x de mesure sur la longueur de la fibre optique 3, pour calculer la température en des points A d'interpolation du plan P de mesure, les points A d'interpolation du plan P de mesure étant situés entre les tronçons 31 de la fibre optique 3 de la paire des supports 5 et/ou étant situés entre les points x de mesure sur la longueur de la fibre optique 3 suivant la première direction X de mesure. Cette interpolation peut être par exemple linéaire. Le dispositif de mesure peut comporter un écran permettant de visualiser la cartographie 10 bidimensionnelle de la température, avec des niveaux de gris ou de couleur différents suivant la valeur de la température en chaque point, ainsi que représenté à titre d'exemple à la figure 6.

Dans un mode de réalisation de l'invention, illustré aux figures 2, 3, 4A, 4B, 4C et 7, le dispositif 1 de mesure comporte plusieurs fibres optiques 3 revêtues du revêtement 4 externe et respectivement plusieurs paires des supports 5, à chacune desquelles est fixée l'une de ces fibres optiques 3 revêtues du revêtement 4 externe. Les paires des supports 5 sont espacées suivant la troisième direction Y, qui est perpendiculaire à la première direction X de mesure et à la deuxième direction Z. La troisième direction Y peut être horizontale ou autre. Les fibres optiques 3 revêtues du revêtement 4 externe sont fixées respectivement aux paires des supports 5 et s'étendant respectivement entre les supports 5 des paires sur la majeure partie de la longueur des fibres optiques 3, dont le revêtement 4 externe est nu et exposé à l'air. Le ou les tronçons principaux 31 décrits ci-dessus peuvent être prévus pour chaque fibre optique 3 et chaque paire des supports 5. Le ou les tronçons secondaires 34 décrits ci-dessus peuvent être prévus pour chaque fibre optique 3 et chaque paire des supports 5. Les tronçons principaux 31 des fibres optiques 3 peuvent être situés dans plusieurs autres plans PXY contenant la première direction X et la troisième direction Y, ces autres plans PXY pouvant donc être horizontaux. Cela permet d'avoir maillage spatial de la mesure de température d'un volume d'air donné en 3 dimensions (par exemple le volume délimité par les supports 5), sans engendrer d'effet d'obstruction sur l'écoulement de l'air.

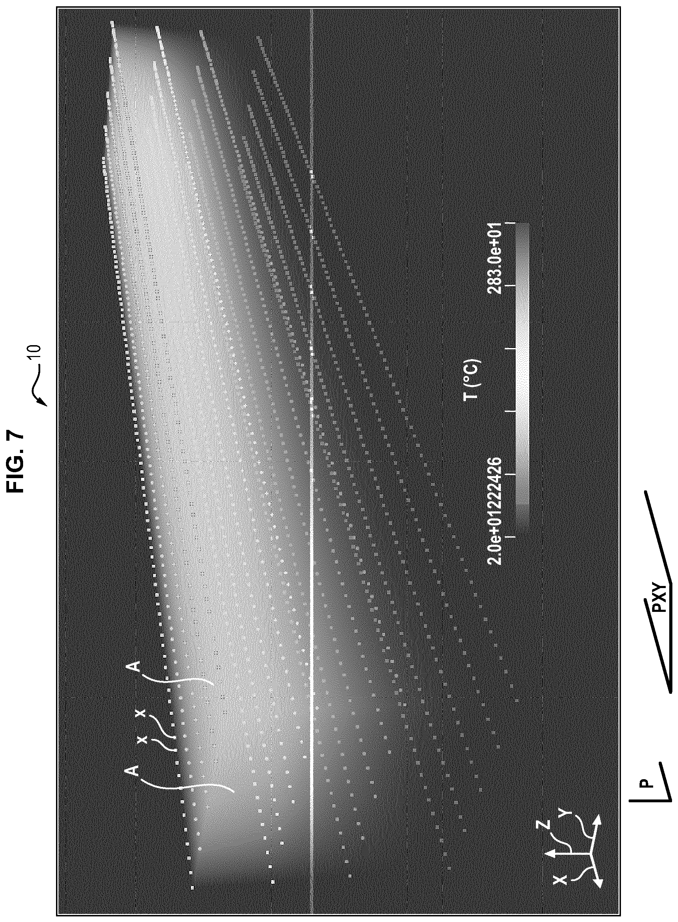

Dans un mode de réalisation de l'invention, illustré aux figures 2, 3, 4A, 4B, 4C, 7, le dispositif 1 de mesure comporte (par exemple dans le module 2 de mesure ou dans l'interrogateur 20 de type Raman ou dans l'unité 24 de commande) un calculateur 8 configuré pour calculer une cartographie 10 tridimensionnelle de la température, par interpolation des mesures de la température T prises respectivement aux points x de mesure sur la longueur de la fibre optique 3, pour calculer la température en des points A d'interpolation de l'espace. Les points A d'interpolation sont situés entre les tronçons 31 de la fibre optique 3 espacés suivant la troisième direction Y c'est-à-dire entre les plans P de mesure (les tronçons principaux 31 des fibre optiques 3 voisines l'une de l'autre pouvant être situés dans plusieurs autres plans PXY contenant la première direction X et la troisième direction Y) et/ou sont situés entre les tronçons 31 de la fibre optique 3 suivant la deuxième direction Z (c'est-à-dire dans chacun des plans P de mesure) et/ou sont situés entre les points x de mesure sur la longueur de la fibre optique 3 suivant la première direction X de mesure. Cette interpolation peut être par exemple linéaire et par exemple tridimensionnelle de type triangulation de Delaunay. Le dispositif de mesure peut comporter un écran permettant de visualiser la cartographie 10 tridimensionnelle de la température, avec des niveaux de gris ou de couleur différents suivant la valeur de la température en chaque point, ainsi que représenté à titre d'exemple à la figure 7.

Dans un mode de réalisation de l'invention, illustré aux figures 2, 3, 4A, 4B, 4C, les tronçons 31 de la longueur de la fibre optique 3 ont entre eux un écartement DZ suivant la deuxième direction Z, qui est plus petit en haut qu'en bas, la deuxième direction Z étant verticale. Cet écartement DZ est situé dans chaque plan P de mesure. Les tronçons principaux 31 des fibres optiques 3 peuvent être situés dans plusieurs autres plans PXY contenant la première direction X et la troisième direction Y, ces autres plans PXY pouvant donc être horizontaux. Ce mode de réalisation permet de mieux mesurer la stratification de l'air. En effet, il y a plus d'hétérogénéité de la température des couches d'air en haut qu'en bas.

Dans un mode de réalisation de l'invention, illustré aux figures 1, 2, 3, 4A, 4B, 4C, au moins une première 301 des fibres optiques 3 et au moins une deuxième 302 des fibres optiques 3 sont disposées à distance d'un objet 200 et de part et d'autre de l'objet 200 suivant la troisième direction Y, pour la mesure de la température de part et d'autre de l'objet 200 suivant la troisième direction Y. Ainsi, un, plusieurs ou tous les tronçons 31 de la (ou des) première fibre optique 301 et/ou le (ou les) plan P de mesure de la (ou des) première fibre optique 301 est situé devant l'objet 200 suivant la troisième direction Y. Un, plusieurs ou tous les tronçons 31 de la (ou des) deuxième fibre optique 302 et/ou le (ou les) plan P de mesure de la (ou des) deuxième fibre optique 3a est situé devant l'objet 200 suivant la troisième direction Y. Cela permet de mesurer la température de l'air en plusieurs points de l'espace autour de l'objet 200. Cet objet 200 peut être de tout type, notamment un objet dégageant de la chaleur, par exemple une armoire électrique, ou autre.

Dans un mode de réalisation de l'invention, illustré aux figures 1, 2, 3, 4A, 4B, 4C, 5, 6, 7, on effectue par le calculateur 8 du dispositif 1 de mesure un recalage spatial des mesures de la température T de l'air le long de la longueur de la fibre optique 3. Pour ce faire, le dispositif 1 de mesure comporte une source 71 de gradient prescrit de température. On dispose la source 71 de gradient prescrit de température contre la surface externe 40 du revêtement 4 externe de la (ou des) fibre optique 3 en une (ou plusieurs) position (ou point) prescrite 7, connue, le long de la longueur de la fibre optique 3. La source 71 de gradient prescrit de température a une température prescrite, connue, différente de la température de l'air. Puis, on identifie par le calculateur 8 la température T mesurée par le dispositif de mesure au point x de mesure situé en cette position prescrite 7 à la température prescrite et connue de la source 71 de gradient prescrit de température situé en cette position prescrite 7. Ainsi, le point x de mesure ayant la température T mesurée égale à la température prescrite et connue de la source 71 de gradient prescrit de température sera recalé par le calculateur 8 comme étant situé à la position prescrite 7. Cela permet de recaler les coordonnées tridimensionnelles des points x de mesure par rapport à une référence donnée par la position prescrite 7.

Pour chaque paire de supports 5, la position prescrite 7 de la source 71 de gradient prescrit de température peut être située sur l'un des supports 5 de la paire, ou sur plusieurs des supports 5 de la paire.

Dans un mode de réalisation de l'invention, illustré aux figures 1, 2, 3, 4A, 4B, 4C, 5, 6, 7, la source 71 de gradient prescrit de température est disposée sur le revêtement 4 externe en plusieurs positions prescrites 7 situées respectivement sur plusieurs tronçons 31 de la longueur de la fibre optique 3 revêtue du revêtement 4 externe, espacés l'un de l'autre au moins suivant la deuxième direction Z.

Par conséquent, la source 71 de gradient prescrit de température peut donc passer sur plusieurs positions prescrites 7 situées sur le même support 5.

Dans un mode de réalisation de l'invention, illustré aux figures 1, 2, 3, 4A, 4B, 4C, 5, 6, 7, la source 71 de gradient prescrit de température comporte un câble chauffant 73 (par exemple électrique) ayant la température prescrite connue, plus grande que la température de l'air. Cette température prescrite connue peut par exemple être égale à 50°C. Le câble chauffant 73 peut donc passer sur plusieurs positions prescrites 7 du revêtement 4 externe de la fibre optique 3, ces positions prescrites 7 étant situées sur le même support 5.

Dans un autre mode de réalisation de l'invention, illustré aux figures 1, 2, 3, 4A, 4B, 4C, 5, 6, 7, la source 71 de gradient prescrit de température comporte une source 72 de projection d'air froid ayant une température prescrite, plus petite que la température de l'air, à la (ou les) position prescrite 7.

Dans un mode de réalisation de l'invention, illustré aux figures 11, 2, 3, 4A, 4B, 4C, 5, 6, 7, on effectue par le calculateur 8 un suréchantillonnage spatial de maxima de température T situés aux positions prescrites 7 situées sur le même support 5, pour effectuer le recalage spatial des mesures de la température T de l'air le long de la longueur de la fibre optique 3. Le suréchantillonnage spatial permet une meilleure définition des maxima de température avec une meilleure résolution spatiale, inférieure au pas fixe PX, pouvant être de l'ordre de 3 cm dans l'exemple ci-dessus du pas fixe PX égal à 15 cm.

En variante, dans les modes de réalisation ci-dessus (monodimensionnel, bidimensionnel dans le plan P de mesure ou tridimensionnel dans plusieurs plans P de mesure), la première direction X de mesure de la fibre optique 3 et de son revêtement externe 4 pourrait être verticale au lieu d'être horizontale, pour mesurer la stratification de l'air. En effet, il y a plus d'hétérogénéité de la température des couches d'air en haut qu'en bas.

## Revendications

1. Utilisation d'un dispositif (1) de mesure comportant au moins une fibre optique (3) revêtue d'un revêtement (4) externe, qui est en un matériau ayant une émissivité ($\varepsilon$) inférieure ou égale à 0.1, qui est nu, qui est exposé à l'air sur au moins une majeure partie d'une longueur de la fibre optique (3) et qui a un diamètre externe inférieur ou égal à 200 $\mu$m, pour la mesure de la température de l'air en au moins un point (x) de mesure situé sur une surface externe du revêtement (4) externe, où

   le dispositif (1) de mesure comporte au moins une paire de supports (5) écartés l'un de l'autre,
   la au moins une fibre optique (3) revêtue du revêtement (4) externe est fixée aux supports (5) et s'étend entre les supports (5) sur la majeure partie de la longueur de la fibre optique (3), dont le revêtement (4) externe est nu et exposé à l'air,
   les supports (5) comprennent des poteaux (51),
   plusieurs tronçons (31) de la longueur de la fibre optique (3) revêtue du revêtement (4) externe, s'étendent chacun suivant une première direction (X) de mesure entre les supports (5) de la au moins une paire des supports (5) et sont espacés l'un de l'autre au moins suivant une deuxième direction (Z) perpendiculaire à la première direction (X) de mesure,
   la deuxième direction (Z) est verticale, les tronçons (31) de la longueur de la fibre optique (3) ont entre eux un écartement (DZ) suivant la deuxième direction (Z), qui est plus petit en haut qu'en bas.

2. Utilisation suivant la revendication 1, **caractérisée en ce que** le matériau du revêtement (4) externe est métallique.

3. Utilisation suivant la revendication 2, **caractérisée en ce que** le matériau du revêtement (4) externe est en aluminium.

4. Utilisation suivant la revendication 2, **caractérisée en ce que** le matériau du revêtement (4) externe est en or.

5. Utilisation suivant l'une quelconque des revendications précédentes, **caractérisée en ce que** le dispositif (1) de mesure comporte un module (6) d'échantillonnage de plusieurs mesures de la température (T) en respectivement plusieurs points (x) de mesure sur la longueur de la fibre optique (3).

6. Utilisation suivant l'une quelconque des revendications 1 à 5, **caractérisée en ce que** les tronçons (31) de la longueur de la fibre optique (3) revêtue du revêtement (4) externe sont situés dans un plan (P) de mesure comprenant la première direction (X) de mesure et la deuxième direction (Z).

7. Utilisation suivant la revendication 6, prise en combinaison avec la revendication 5, **caractérisée en ce que** l'on calcule par un calculateur (8) du dispositif (1) de mesure une cartographie (10) bidimensionnelle de la température, par interpolation des mesures de la température (T) prises respectivement aux points (x) de mesure sur la longueur de la fibre optique (3), pour calculer la température en des points d'interpolation du plan (P) de mesure, qui sont situés entre les tronçons (31) de la fibre optique (3) de la au moins une paire des supports (5) et/ou qui sont situés entre les points (x) de mesure sur la longueur de la fibre optique (3).

8. Utilisation suivant la revendication suivant l'une quelconque des revendications 1 à 6, **caractérisée en ce que** le dispositif (1) de mesure comporte plusieurs fibres optiques (3) revêtues du revêtement (4) externe et respectivement plusieurs paires des supports (5), espacées suivant une troisième direction (Y), qui est perpendiculaire à la première direction (X) de mesure et à la deuxième direction (Z),
les fibres optiques (3) revêtues du revêtement (4) externe étant fixées respectivement aux supports (5) des paires et s'étendant respectivement entre les supports (5) des paires sur la majeure partie de la longueur des fibres optiques (3), dont le revêtement (4) externe est nu et exposé à l'air.

9. Utilisation suivant la revendication 8, prise en combinaison avec la revendication 5, **caractérisée en ce que** l'on calcule par un calculateur (8) du dispositif (1) de mesure une cartographie (10) tridimensionnelle de la température, par interpolation des mesures de la température (T) prises respectivement aux points (x) de mesure sur la longueur de la fibre optique (3), pour calculer la température en des points d'interpolation de l'espace, qui sont situés entre les tronçons (31) de la fibre optique (3) espacés suivant la troisième direction (Y) et/ou qui sont situés entre les tronçons (31) de la fibre optique (3) suivant la deuxième direction (Z) et/ou qui sont situés entre les points (x) de mesure sur la longueur de la fibre optique (3).

10. Utilisation suivant la revendication 7 ou 9, **caractérisée en ce que** le dispositif (1) de mesure comporte un écran de visualisation de la cartographie (10).

11. Utilisation suivant l'une quelconque des revendications précédentes, prise en combinaison avec la revendication 8, **caractérisée en ce qu'**au moins une première des fibres optiques (3) et au moins une deuxième des fibres optiques (3) sont disposées à distance d'un objet (200) et de part et d'autre de l'objet (200) suivant la troisième direction (Y), pour la mesure de la température de part et d'autre de l'objet (200) suivant la troisième direction (Y).

12. Utilisation suivant l'une quelconque des revendications précédentes, **caractérisée en ce que** le dispositif (1) de mesure comporte un module (2) de calcul, qui est raccordé à au moins une extrémité (32) du de la fibre optique (3) et qui est configuré pour calculer la température (T) de l'air au au moins un point (x) de mesure situé sur la surface externe du revêtement (4) externe, par réflectométrie de premiers signaux (S1) émis dans la fibre optique (3), pour calculer la au moins une mesure de la température (T) au au moins un point (x) de mesure sur la surface externe (40) de la fibre optique (3).

13. Utilisation suivant la revendication 12, **caractérisée en ce que** le module (2) de calcul comporte au moins un interrogateur (20) de type Raman.

14. Utilisation suivant la revendication 13, **caractérisée en ce que** l'interrogateur (20) de type Raman comporte au moins un émetteur (21) pour émettre des premiers signaux (S1) le long de la fibre optique (3), au moins un récepteur (22) pour recevoir des deuxièmes signaux (S2), qui sont réfléchis par la fibre optique (3) en réponse aux premiers signaux (S1), et un calculateur (24) configuré pour calculer la température (T) à partir d'un rapport ($\frac{P_s(t,l)}{P_{as}(t,l)}$) de puissance de deux raies (S2a, S2b) de fréquences prescrites différentes, qui correspondent à un pic Stokes (S2a) et à un pic anti-Stokes (S2a) et qui sont présentes dans les deuxièmes signaux (S2).

15. Utilisation suivant la revendication 14, **caractérisée en ce que** le calculateur (24) est configuré pour calculer la température la température $T(t, l)$ selon l'équation suivante :

$$T(t,l) = T_{offset} + \frac{\gamma}{ln\left(\frac{P_s(t,l)}{P_{as}(t,l)}\right) + C(t) - l\,\Delta\alpha}$$

où $P_s$ est la puissance du pic Stokes (S2a) mesurée par le récepteur (22a), $P_{as}$ est la puissance du pic anti-Stockes (S2b) mesurée par le récepteur (22b), t est le temps, *l* est l'abscisse du point (x) de mesure le long de la première direction (X) le long de la fibre optique (3) depuis l'interrogateur (20) de type Raman, $T_{offset}$ est un coefficient prescrit de l'interrogateur (20) de type Raman, $\Delta\alpha$ est un coefficient prescrit d'atténuation différentielle entre le pic Stockes (S2a) et le pic anti-Stockes (S2b), $\gamma$ et $C(t)$ sont des paramètres intrinsèques de l'interrogateur (20) de type Raman.

16. Utilisation suivant l'une quelconque des revendications précédentes, **caractérisée en ce que** l'on effectue par un calculateur (8) du dispositif (1) de mesure un recalage spatial des mesures de la température (T) de l'air le long de la longueur de la fibre optique (3), en identifiant par le calculateur (8) la température mesurée en au moins une position prescrite (7) le long de la longueur de la au moins une fibre optique (3), sur laquelle une source (71) de gradient prescrit de température est imposée sur le revêtement (4) externe.

17. Utilisation suivant la revendication 16, **caractérisée en ce que** la position prescrite (7) de la source (71) de gradient de température est située sur au moins l'un des supports (5).

18. Utilisation suivant la revendication 21, **caractérisée en ce que** la source (71) de gradient prescrit de température est disposée sur le revêtement (4) externe en plusieurs positions prescrites (7) situées respectivement sur plusieurs tronçons (31) de la longueur de la fibre optique (3) revêtue du revêtement (4) externe, espacés l'un de l'autre au moins suivant la deuxième direction (Z).

19. Utilisation suivant l'une quelconque des revendications 16 à 18, **caractérisée en ce que** la source (71) de gradient prescrit de température comporte un câble chauffant (73).

20. Utilisation suivant la revendication 19 prise en combinaison avec la revendication 18, **caractérisée en ce qu'**un même câble chauffant (73) passe sur les positions prescrites (7) situées sur le même support (5).

21. Utilisation suivant la revendication 20, **caractérisée en ce que** l'on effectue par le calculateur (8) un suréchantillonnage spatial de maxima de température (T) situés aux positions prescrites (7) situées sur le même support (5), pour effectuer le recalage spatial des mesures de la température (T) de l'air le long de la longueur de la fibre optique (3).

22. Utilisation suivant l'une quelconque des revendications 16 à 18, **caractérisée en ce que** la source (71) de gradient prescrit de température comporte une source (72) de projection d'air froid.

## Patentansprüche

1. Verwendung einer Messvorrichtung (1), die mindestens einen Lichtwellenleiter (3) umfasst, der mit einer äußeren Beschichtung (4) aus einem Material mit einer Emissivität ($\varepsilon$) von kleiner oder gleich 0,1 beschichtet ist, die blank ist, die über mindestens einen größten Teil einer Länge des Lichtwellenleiters (3) der Luft ausgesetzt ist und die einen Außendurchmesser von kleiner oder gleich 200 $\mu$m hat, zur Messung der Temperatur der Luft an mindestens einem Messpunkt (x), der sich an einer äußeren Oberfläche der äußeren Beschichtung (4) befindet, wobei

   die Messvorrichtung (1) mindestens ein Paar von voneinander entfernten Trägern (5) umfasst,
   der mindestens eine mit der äußeren Beschichtung (4) beschichtete Lichtwellenleiter (3) an den Trägern (5) befestigt ist und sich zwischen den Trägern (5) über den größten Teil der Länge des Lichtwellenleiters (3) erstreckt, dessen äußere Beschichtung (4) blank ist und der Luft ausgesetzt ist,
   die Träger (5) Pfosten (51) enthalten,
   mehrere Abschnitte (31) der Länge des mit der äußeren Beschichtung (4) beschichteten Lichtwellenleiters (3) sich jeweils in eine erste Messrichtung (X) zwischen den Trägern (5) des mindestens einen Paares von Trägern (5) erstrecken und mindestens in einer zweiten Richtung (Z) senkrecht zur ersten Messrichtung (X) voneinander beabstandet sind,
   die zweite Richtung (Z) vertikal ist, die Abschnitte (31) der Länge des Lichtwellenleiters (3) zueinander einen Abstand (DZ) entlang der zweiten Richtung (Z) haben, der oben kleiner ist als unten.

2. Verwendung nach Anspruch 1, **dadurch gekennzeichnet, dass** das Material der äußeren Beschichtung (4) metallisch ist.

3. Verwendung nach Anspruch 2, **dadurch gekennzeichnet, dass** das Material der äußeren Beschichtung (4) aus Aluminium ist.

**4.** Verwendung nach Anspruch 2, **dadurch gekennzeichnet, dass** das Material der äußeren Beschichtung (4) aus Gold ist.

**5.** Verwendung nach einem beliebigen der vorhergehenden Ansprüche, **dadurch gekennzeichnet, dass** die Messvorrichtung (1) ein Modul (6) zur Probenahme mehrerer Messungen der Temperatur (T) an jeweils mehreren Messpunkten (x) über die Länge des Lichtwellenleiters (3) umfasst.

**6.** Verwendung nach einem beliebigen der Ansprüche 1 bis 5, **dadurch gekennzeichnet, dass** sich die Abschnitte (31) der Länge des mit der äußeren Beschichtung (4) beschichteten Lichtwellenleiters (3) in einer Messebene (P) befinden, die die erste Messrichtung (X) und die zweite Richtung (Z) umfasst.

**7.** Verwendung nach Anspruch 6, in Kombination mit Anspruch 5, **dadurch gekennzeichnet, dass** durch einen Rechner (8) der Messvorrichtung (1) eine zweidimensionale Kartierung (10) der Temperatur durch Interpolation der Messungen der Temperatur (T), die jeweils an den Messpunkten (x) über die Länge des Lichtwellenleiters (3) erfolgt sind, berechnet wird, um die Temperatur an Interpolationspunkten der Messebene (P) zu berechnen, die sich zwischen den Abschnitten (31) des Lichtwellenleiters (3) des mindestens einen Paars von Trägern (5) befinden und/oder die sich zwischen den Messpunkten (x) über die Länge des Lichtwellenleiters (3) befinden.

**8.** Verwendung nach einem beliebigen der Ansprüche 1 bis 6, **dadurch gekennzeichnet, dass** die Messvorrichtung (1) mehrere mit der äußeren Beschichtung (4) beschichtete Lichtwellenleiter (3) und jeweils mehrere Paare der Träger (5) umfasst, die in einer dritten Richtung (Y) beabstandet sind, die senkrecht zur ersten Messrichtung (X) und zur zweiten Richtung (Z) verläuft,
wobei die mit der äußeren Beschichtung (4) beschichteten Lichtwellenleiter (3) jeweils an den Trägern (5) der Paare befestigt sind und sich jeweils zwischen den Trägern (5) der Paare über den größten Teil der Länge des Lichtwellenleiters (3) erstrecken, dessen äußere Beschichtung (4) blank ist und der Luft ausgesetzt ist.

**9.** Verwendung nach Anspruch 8, in Kombination mit Anspruch 5, **dadurch gekennzeichnet, dass** durch einen Rechner (8) der Messvorrichtung (1) eine dreidimensionale Kartierung (10) der Temperatur durch Interpolation der Messungen der Temperatur (T), die jeweils an den Messpunkten (x) über die Länge des Lichtwellenleiters (3) erfolgt sind, berechnet wird, um die Temperatur an Interpolationspunkten des Raums zu berechnen, die sich zwischen den in der dritten Richtung (Y) beabstandeten Abschnitten (31) des Lichtwellenleiters (3) befinden und/oder die sich zwischen den Abschnitten (31) des Lichtwellenleiters (3) in der zweiten Richtung (Z) befinden und/oder die sich zwischen den Messpunkten (x) über die Länge des Lichtwellenleiters (3) befinden.

**10.** Verwendung nach Anspruch 7 oder 9, **dadurch gekennzeichnet, dass** die Messvorrichtung (1) einen Kartierungsanzeigebildschirm (10) umfasst.

**11.** Verwendung nach einem beliebigen der vorhergehenden Ansprüche, in Kombination mit Anspruch 8, **dadurch gekennzeichnet, dass** mindestens ein erster der Lichtwellenleiter (3) und mindestens ein zweiter der Lichtwellenleiter (3) im Abstand zu einem Objekt (200) und auf beiden Seiten des Objekts (200) entlang der dritten Richtung (Y) angeordnet sind, um die Temperatur auf beiden Seiten des Objekts (200) entlang der dritten Richtung (Y) zu messen.

**12.** Verwendung nach einem beliebigen der vorhergehenden Ansprüche, **dadurch gekennzeichnet, dass** die Messvorrichtung (1) ein Berechnungsmodul (2) umfasst, das an mindestens einem Ende (32) des Lichtwellenleiters (3) angeschlossen und so konfiguriert ist, dass es die Temperatur (T) der Luft am mindestens einen Messpunkt (x) auf der äußeren Oberfläche der äußeren Beschichtung (4) durch Reflektometrie erster Signale (S1), die in dem Lichtwellenleiter (3) ausgesandt werden, berechnet, um die mindestens eine Messung der Temperatur (T) am mindestens einen Messpunkt (x) auf der äußeren Oberfläche (40) des Lichtwellenleiters (3) zu berechnen.

**13.** Verwendung nach Anspruch 12, **dadurch gekennzeichnet, dass** das Berechnungsmodul (2) mindestens einen Raman-Interrogator (20) umfasst.

**14.** Verwendung nach Anspruch 13, **dadurch gekennzeichnet, dass** der Raman-Interrogator (20) mindestens einen Sender (21) zum Senden erster Signale (S1) entlang des Lichtwellenleiters (3), mindestens einen Empfänger (22) zum Empfangen zweiter Signale (S2), die von dem Lichtwellenleiter (3) als Antwort auf die ersten Signale (S1) reflektiert werden, und einen Rechner (24) umfasst, der so konfiguriert ist, dass er die Temperatur (T) anhand eines Leistungsverhältnisses ( $\frac{P_s(t,l)}{P_{as}(t,l)}$ ) zweier Linien (S2a, S2b) mit unterschiedlichen vorgegebenen Frequenzen berechnet, die einem Stokes-Peak (S2a) und einem Anti-Stokes-Peak (S2a) entsprechen und in den zweiten Signalen (S2) vorhanden sind.

15. Verwendung nach Anspruch 14, **dadurch gekennzeichnet, dass** der Rechner (24) so konfiguriert ist, dass er die Temperatur $T(t, l)$ gemäß der folgenden Gleichung berechnet:

$$T(t,l) = T_{offset} + \frac{\gamma}{ln\left(\frac{P_s(t,l)}{P_{as}(t,l)}\right) + C(t) - l\,\Delta\alpha}$$

wobei $P_s$ die vom Empfänger (22a) gemessene Leistung des Stokes-Peaks (S2a) ist, $P_{as}$ die vom Empfänger (22b) gemessene Leistung des Anti-Stokes-Peaks (S2b) ist, $t$ die Zeit ist, $l$ die X-Achse des Messpunkts (x) entlang der ersten Richtung (X) entlang des Lichtwellenleiters (3) vom Raman-Interrogator (20) ist, $T_{OffSet}$ ein vorgegebener Koeffizient des Raman-Interrogators (20) ist, $\Delta\alpha$ ein vorgegebener Koeffizient der Differenzdämpfung zwischen dem Stokes-Peak (S2a) und dem Anti-Stokes-Peak (S2b) ist, $\gamma$ *und* $C(t)$ intrinsische Parameter des Raman-Interrogators (20) sind.

16. Verwendung nach einem beliebigen der vorhergehenden Ansprüche, **dadurch gekennzeichnet, dass** durch einen Rechner (8) der Messvorrichtung (1) eine räumliche Neueinstellung der Messungen der Temperatur (T) der Luft entlang der Länge des Lichtwellenleiters (3) durchgeführt wird, indem durch den Rechner (8) die gemessene Temperatur an mindestens einer vorgegebenen Position (7) entlang der Länge des mindestens einen Lichtwellenleiters (3) identifiziert wird, auf dessen äußerer Beschichtung (4) eine Quelle (71) eines vorgegebenen Temperaturgradienten aufgebracht ist.

17. Verwendung nach Anspruch 16, **dadurch gekennzeichnet, dass** sich die vorgegebene Position (7) der Temperaturgradientenquelle (71) auf mindestens einem der Träger (5) befindet.

18. Verwendung nach Anspruch 21, **dadurch gekennzeichnet, dass** die Quelle (71) des vorgegebenen Temperaturgradienten an der äußeren Beschichtung (4) in mehreren vorgegebenen Positionen (7) angeordnet ist, die sich jeweils auf mehreren Abschnitten (31) der Länge des mit der äußeren Beschichtung (4) beschichteten Lichtwellenleiters (3) befinden, die mindestens in der zweiten Richtung (Z) voneinander beabstandet sind.

19. Verwendung nach einem beliebigen der Ansprüche 16 bis 18, **dadurch gekennzeichnet, dass** die Quelle (71) des vorgegebenen Temperaturgradienten ein Heizkabel (73) umfasst.

20. Verwendung nach Anspruch 19 in Kombination mit Anspruch 18, **dadurch gekennzeichnet, dass** ein und dasselbe Heizkabel (73) an den vorgegebenen Positionen (7) verläuft, die sich auf demselben Träger (5) befinden.

21. Verwendung nach Anspruch 20, **dadurch gekennzeichnet, dass** durch den Rechner (8) eine räumliche Überabtastung von Temperaturmaxima (T) an den vorgegebenen Positionen (7), die sich auf demselben Träger (5) befinden, durchgeführt wird, um die räumliche Neueinstellung der Messungen der Temperatur (T) der Luft entlang der Länge des Lichtwellenleiters (3) durchzuführen.

22. Verwendung nach einem beliebigen der Ansprüche 16 bis 18, **dadurch gekennzeichnet, dass** die Quelle (71) des vorgegebenen Temperaturgradienten eine Kaltluft-Ausstoßquelle (72) umfasst.

## Claims

1. Use of a measuring device (1) comprising at least one optical fibre (3) coated with an external coating (4), which is made of a material having an emissivity ($\varepsilon$) less than or equal to 0.1, which is bare, which is exposed to air over at least a major part of the length of the optical fibre (3) and has an external diameter less than or equal to 200 $\mu$m, for measuring the air temperature at at least one measurement point (x) located on an external surface of the external coating (4), wherein

   the measuring device (1) comprises at least one pair of supports (5) spaced apart from each other,
   the at least one optical fibre (3) coated with the outer coating (4) is attached to the supports (5) and extends between the supports (5) over the major part of the length of the optical fibre (3), the outer coating (4) of which is bare and exposed to the air,

the supports (5) comprise posts (51),

a plurality of sections (31) of the length of the optical fibre (3) coated with the outer coating (4) each extend in a first measurement direction (X) between the supports (5) of the at least one pair of supports (5) and are spaced apart from each other at least in a second direction (Z) perpendicular to the first measurement direction (X),

the second direction (Z) is vertical, the sections (31) of the length of the optical fibre (3) have a spacing (DZ) between them in the second direction (Z), which is smaller at the top than at the bottom.

2. Use according to claim 1, **characterised in that** the material of the outer coating (4) is metallic.

3. Use according to claim 2, **characterised in that** the material of the outer coating (4) is aluminium.

4. Use according to claim 2, **characterised in that** the material of the outer coating (4) is gold.

5. Use according to any one of the preceding claims, **characterised in that** the measuring device (1) comprises a module (6) for sampling several measurements of the temperature (T) at several respective measuring points (x) along the length of the optical fibre (3).

6. Use according to any one of claims 1 to 5, **characterised in that** the sections (31) of the length of the optical fibre (3) coated with the external coating (4) are located in a measurement plane (P) comprising the first measurement direction (X) and the second direction (Z).

7. Use according to claim 6, taken in combination with claim 5, **characterised in that** a two-dimensional temperature map (10) is calculated by a computer (8) of the measuring device (1) by interpolating the temperature measurements (T) taken at the respective measuring points (x) along the length of the optical fibre (3) to calculate the temperature at interpolation points of the measurement plane (P) which are located between the sections (31) of the optical fibre (3) of the at least one pair of supports (5) and/or which are located between the measurement points (x) along the length of the optical fibre (3).

8. Use according to any one of claims 1 to 6, **characterised in that** the measuring device (1) comprises several optical fibres (3) coated with the external coating (4) and several pairs of supports (5), respectively, spaced apart in a third direction (Y), which is perpendicular to the first measuring direction (X) and to the second direction (Z),

the optical fibres (3) coated with the outer coating (4) being fixed respectively to the supports (5) of the pairs and extending respectively between the supports (5) of the pairs over the major part of the length of the optical fibres (3), whose outer coating (4) is bare and exposed to the air.

9. Use according to claim 8, taken in combination with claim 5, **characterised in that** a three-dimensional temperature map (10) is calculated by a computer (8) of the measuring device (1) by interpolating the temperature measurements (T) taken respectively at the measurement points (x) along the length of the optical fibre (3) to calculate the temperature at interpolation points in space which are located between the sections (31) of the optical fibre (3) spaced apart in the third direction (Y) and/or which are located between the sections (31) of the optical fibre (3) in the second direction (Z) and/or which are located between the measurement points (x) along the length of the optical fibre (3).

10. Use according to claim 7 or 9, **characterised in that** the measuring device (1) comprises a display screen for viewing the map (10).

11. Use according to any one of the preceding claims, taken in combination with claim 8, **characterised in that** at least a first of the optical fibres (3) and at least a second of the optical fibres (3) are arranged at a distance from an object (200) and on either side of the object (200) in the third direction (Y), for measuring the temperature on either side of the object (200) in the third direction (Y).

12. Use according to any one of the preceding claims, **characterised in that** the measuring device (1) comprises a calculation module (2) which is connected to at least one end (32) of the optical fibre (3) and which is configured to calculate the temperature (T) of the air at the at least one measurement point (x) located on the outer surface of the outer coating (4) by reflectometry of first signals (S1) emitted in the optical fibre (3), to calculate the at least one measurement of the temperature (T) at the at least one measurement point (x) on the outer surface (40) of the optical fibre (3).

13. Use according to claim 12, **characterised in that** the calculation module (2) comprises at least one Raman-type interrogator (20).

14. Use according to claim 13, **characterised in that** the Raman interrogator (20) comprises at least one transmitter (21) for transmitting first signals (S1) along the optical fibre (3), at least one receiver (22) for receiving second signals (S2), which are reflected by the optical fibre (3) in response to the first signals (S1), and a calculator (24) configured to calculate the temperature (T) from a power ratio ( $\frac{P_s(t,l)}{P_{as}(t,l)}$ ) of two lines (S2a, S2b) of different prescribed frequencies, which correspond to a Stokes peak (S2a) and an anti-Stokes peak (S2a) and which are present in the second signals (S2).

15. Use according to claim 14, **characterised in that** the calculator (24) is configured to calculate the temperature $T(t, l)$ according to the following equation:

$$T(t,l) = T_{offset} + \frac{\gamma}{ln\left(\frac{P_s(t,l)}{P_{as}(t,l)}\right) + C(t) - l\,\Delta\alpha}$$

where $P_s$ is the power of the Stokes peak (S2a) measured by the receiver (22a), $P_{as}$ is the anti-Stokes peak power (S2b) measured by the receiver (22b), t is time, l is the abscissa of the measurement point (x) along the first direction (X) along the optical fibre (3) from the Raman interrogator (20), $T_{offset}$ is a prescribed coefficient of the Raman interrogator (20), $\Delta\alpha$ is a prescribed coefficient of differential attenuation between the Stokes peak (S2a) and the anti-Stokes peak (S2b), y and C(t) are intrinsic parameters of the Raman interrogator (20).

16. Use according to any one of the preceding claims, **characterised in that** a computer (8) of the measuring device (1) performs a spatial recalibration of the air temperature (T) measurements along the length of the optical fibre (3), by identifying, using the computer (8), the temperature measured at at least one prescribed position (7) along the length of the at least one optical fibre (3), on which a source (71) of a prescribed temperature gradient is imposed on the outer coating (4).

17. Use according to claim 16, **characterised in that** the prescribed position (7) of the source (71) of temperature gradient is located on at least one of the supports (5).

18. Use according to claim 21, **characterised in that** the source (71) of prescribed temperature gradient is arranged on the outer coating (4) at several prescribed positions (7) located respectively on several sections (31) of the length of the optical fibre (3) coated with the outer coating (4), spaced apart from one another at least in the second direction (Z).

19. Use according to any one of claims 16 to 18, **characterised in that** the source (71) of the prescribed temperature gradient comprises a heating cable (73).

20. Use according to claim 19 in combination with claim 18, **characterised in that** the same heating cable (73) passes over the prescribed positions (7) located on the same support (5).

21. Use according to claim 20, **characterised in that** the computer (8) performs spatial oversampling of temperature maxima (T) located at the prescribed positions (7) on the same support (5), in order to perform spatial recalibration of the air temperature (T) measurements along the length of the optical fibre (3).

22. Use according to any one of claims 16 to 18, **characterised in that** the source (71) of the prescribed temperature gradient comprises a source (72) for projecting cold air.

## FIG. 1

## FIG. 2

FIG. 3

# FIG. 4A

EP 4 474 784 B1

# FIG. 4B

# FIG. 4C

FIG. 5

EP 4 474 784 B1

20

FIG. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10240824 B2